# EUROPEAN PATENT SPECIFICATION

(11) **EP 3 604 065 B1**
(45) Date of publication and mention of the grant of the patent: **04.11.2020**
(21) Application number: 18290091.0
(22) Date of filing: 01.08.2018
(51) Int. Cl.: B60W 30/095, B60W 50/00

(54) **VEHICLE TRAVELLING CONTROL APPARATUS**
FAHRZEUGFAHRSTEUERUNGSVORRICHTUNG
APPAREIL DE COMMANDE DE DÉPLACEMENTS DE VÉHICULE

(43) Date of publication of application: 05.02.2020
(73) Proprietor: Hitachi Automotive Systems, Ltd., Hitachinaka-shi, Ibaraki 312-8503 (JP)
(72) Inventor: Kido, Hideaki, Hitachinaka-shi, Ibaraki, 312-8503 (JP); Nagatsuka, Keiichiro, Hitachinaka-shi, Ibaraki, 312-8503 (JP)
(74) Representative: Schwamb, Timo

(56) References cited:
- DE-A1- 10 149 146
- DE-A1-102015 118 578
- DE-A1-102016 117 712
- DE-A1-102017 200 897
- US-A1- 2005 209 764
- US-A1- 2013 245 877
- US-A1- 2015 375 744
- US-A1- 2016 194 003

## Description

The present invention relates to a travelling control apparatus, a corresponding travelling control method, an own vehicle including the travelling control apparatus, and a computer program product which is adapted to carry out the travelling control method. The control allows keeping an object, which is located on or close to the driving path/route of the own vehicle, continuously within the field of view of a sensor, a camera or the like which is installed at the own vehicle. This improves the reliability of the travelling control of the own vehicle and the driver can enjoy higher driving comfort and safety.

Present technologies, such as described by JP 2000-011300 A and JP 2016-139163 A, provide travelling control devices which assist and/or enable autonomous driving by controlling an own vehicle according to a travel plan. JP 2000-011300 A describes a travelling position determining apparatus which is configured to judge whether the detection of an obstacle ahead is disturbed and, if the detection is disturbed, to adjust the lateral position of the own vehicle on the track so that the obstacle ahead can be detected. JP 2016-139163 A describes an apparatus of a vehicle control which can modify a travelling plan of the own vehicle if it is determined that, e.g., a pedestrian will cross the travelling route of the travelling plan and if there is a danger of a collision.

The above documents provide solutions for particular problems in regard of autonomous driving, however, it is not considered that the own vehicle has vehicle surroundings observations unit(s), which observe the periphery of the vehicle, and that it may cause danger if an object in the periphery of the own vehicle cannot be maintained within the field of view continuously (or at least as long as possible) while the autonomous vehicle is guided along the route of the travelling plan.

US 2016/0194003 A1 discloses a vehicle control device which calculates a lost duration, which is a continuous period of time during which the position of a preceding vehicle is lost. The lost duration is compared with threshold values and if the lost lost duration exceeds a particular threshold, the own vehicle is repositioned, decelerated or a warning is output.

The herein described and claimed subject-matter addresses the technical problem that an object which is present in the periphery/surroundings of an own vehicle shall be maintained as long as possible within the field of view of vehicle surroundings observations unit(s) of the own vehicle while the own vehicle travels in accordance with a (future/planned) travelling plan. This technical problem is solved by the invention according to the independent claims. Further preferred developments are described by the dependent claims.

According to the subject-matter of the present invention, there is proposed a vehicle travelling control apparatus (or driving assistance apparatus). Said vehicle travelling control apparatus includes a target detection unit configured to receive data (the term "information" may also be used in the following) from a vehicle surroundings observation unit of the own vehicle and to detect an object in the surroundings of the own vehicle from the received data. Said vehicle travelling control apparatus further includes a planning unit that is configured to generate an travelling plan (including the travelling route) of the own vehicle and a visibility planning unit which is configured to determine a time (time interval) during which the detected object will be outside, i.e. not within, a field of view/range of the vehicle surroundings observation unit while travelling along the travelling plan and to input correction information to the planning unit if the determined time is larger than a preset allowable time.

In the above and in the following "time" may be replaced by "distance" or a combination of a time and a distance may be used.

The vehicle travelling control apparatus/driving assistance apparatus may be installed at an own vehicle which may be enabled to drive autonomously based on the control, e.g., of the vehicle travelling control apparatus and/or another control unit. The vehicle travelling control apparatus may be part of another control apparatus of the own vehicle or it may be a separate (and possibly additional) apparatus.

The data which is received by the target detection unit may include images taken by a camera, sensor measurement data, and the like. The data may be provided by the one or more vehicle surroundings observation unit(s) which the own vehicle may have. The vehicle surroundings observation unit(s) and the vehicle travelling control apparatus have a data connection which each other, for example a wired and/or wireless connection. The vehicle surroundings observation unit(s) and the vehicle travelling control apparatus may be disposed at different positions within the own vehicle or may be integrated with each other.

The received data may be processed by the target detection unit in order to check whether an object can be detected in the periphery/surroundings of the own vehicle. More preferably, it is checked for objects which are on or within the surroundings of the route of the travelling plan, i.e. objects which are positioned further down the travelling route when looking from the actual position of the own vehicle. The object for which it is searched/checked by the target detection unit may be a predefined object stored in a database which may be provided within the vehicle travelling control apparatus or which may be located in a remote storage space to which the vehicle travelling control apparatus may have a wireless access and data transfer connection. For example, the object detection process may include using image processing technology which is able to detect any object or, more preferably, a predefined object within the data, such as image(s) taken by a camera of the vehicle. One possible way of detecting an object may include comparing detection data with previously stored data of a predefined object.

Predefined objects may include all kind of objects which may, e.g., affect the travelling of the own vehicle or which may have an impact on the realization of the travelling plan. Specific examples may include other vehicles, other bodies, traffic lights, road markings, traffic signs, obstacles, a gate/barrier, pedestrians, and/or the like.

The planning unit may generate a travelling plan which may include a route along which the own vehicle will travel from the present position, and/or control parameters for the control of the own vehicle, like speed, acceleration, steering, shifting. The travelling plan may, more preferably, include the entire set of parameters and information which is necessary for carrying out autonomous driving by an autonomous driving control, which the vehicle travelling control apparatus may be itself or to which it may be connected. The planning unit may use the data from the vehicle surroundings observation unit(s), from GPS, from maps which are provided to the vehicle travelling control apparatus via wireless data transfer, travel destinations entered by the driver, and the like to generate a travelling plan. The travelling plan may be divided into sub-sections. The travelling plan may include navigation advices to the driver only and/or it may include parameters/commands necessary to travel the own vehicle to the destination autonomously, i.e. without or with minimal interaction of the driver.

The visibility planning unit may determine a time (or time interval) during which the detected object will be outside a field of view (which may also be a "range") of the vehicle surroundings observation unit while travelling along (or "in accordance with") the travelling plan. If the determined time or time interval is larger than an allowable time (or time interval), which may be preset/predefined and which may more preferably vary depending on different predefined driving situations, correction information is input to the planning unit. Instead of or in combination with the above noted "times", the visibility planning unit may uses "distances" as already mentioned before.

The technical advantage of the above described vehicle travelling control apparatus is that an object which is present in the periphery of the own vehicle is detected and the vehicle travelling plan can then be adapted such that the object is maintained in the field of view of the vehicle's observation unit(s) continuously or at least as long as possible. Further beneficial technical consequences thereof are that the autonomous driving becomes safer because the object is never or only as short as possible out of "sight"/"invisible", and it is more comfortable because the travelling plan may be adapted based on more complete information (compared to the case that the object becomes "invisible" during the driving), because, e.g., hard braking or sudden deceleration/acceleration or the like can be avoided, which may be happen if the object, e.g., suddenly "reappears" in the field of view.

Preferably, the planning unit of the vehicle travelling control apparatus is configured to adapt the travelling plan; preferably this means, it may generate an adapted travelling plan based on the correction information (which is data exchanged between/provided from) the visibility planning unit. The travelling plan may be adapted such that a time (or time interval) during which the detected object will be outside a field of view of the vehicle surroundings observation unit while the own vehicle will follow the travelling plan is decreased or minimized.

More preferably the adaption will be carried out such that the time or time interval will be equal to or smaller than the allowable time (time interval) after the adaption of the travelling plan. Alternatively, it will be carried out so that the travelling distance will be equal to or smaller than an allowable distance. Here it is noted that, preferably, the travelling plan may continuously be adapted in regard of other reasons, such as a new route has to be taken due to traffic jams, or the like. However, the detection of an object by the target detection unit will additionally start a checking procedure whether an adaption will become necessary, and the adaption is more preferably carried out in advance of the actual travelling along the travelling plan/route, i.e. the travelling plan is preferably a planned or future travelling plan. In other words, the determination or calculation of time intervals, as described above, actually may be named a "prediction" or "estimation" of the travelling which is carried out in accordance with the settings/parameters of the actual travelling plan. For example, if the actual travelling plan includes travelling a straight road ahead of the actual position of the own vehicle for 100 meters at 45 km/h, the time interval the vehicle will require for travelling in accordance and along said exemplary travelling plan is predictable. If, however, an object is detected within these 100 meters ahead of the own vehicle (preferably it is checked whether said object may affect the realization of the travelling plan), the travelling plan may have to be adapted to maintain the detected object in the field of view of the vehicle surroundings observation unit(s) during the entire 100 meters or at least as long as possible. The adaption may preferably include adapting the speed of the own vehicle, adapting the driving route/path, and/or the like.

Decreasing the time interval during which the detected object is "invisible" for the own vehicle, i.e. for the surroundings observation unit(s) thereof, maximizes the safety and comfort of the travelling. The reliability of the control is also improved because a long-term travel planning strategy is enabled.

Preferably, the visibility planning unit includes a visibility prediction unit which is configured to receive data about a configuration of the vehicle surroundings observation unit from a (sensor) configuration unit. The data may include information about the field of view/range of the vehicle surroundings observation unit(s), for example, this may include the area covered by the field of view/range relative to the own vehicle; that may, e.g., mean that the data includes the information that one vehicle surroundings observation unit may be a camera which has a triangular-shaped field of view (in the bird's perspective) with a specific opening angle, and a specific length, and which may be directed to the front-side ahead of the own vehicle. Further, the visibility prediction unit may receive information about the detected object, which may include one or more of: the position (e.g. relative to the actual position of the own vehicle and/or absolute, such as GPS data), the kind of the detected object, e.g. a traffic light, a condition of the detected object, such as moving, fixed, green light, red light, and the like.

Preferably, the visibility prediction unit is configured to predict, e.g. by estimation, extrapolation or the like, for each or at least various positions or times along the route of the travelling plan whether the detected object is within or outside the field of view. Preferably, the visibility planning unit includes a risk assessment unit which is configured to determine the time (time interval) the own vehicle will need for completing the travelling plan (or a time until reaching a position which was selected/set) and the time (or the distance) the detected object is not within the field of view/range of the vehicle surroundings observation unit. This allows a quick and computational less complex estimation whether the travelling plan should be adapted or not.

Alternatively, the risk assessment unit or another subunit of the travelling control apparatus 1 may set a future evaluation time period instead of calculating the time until the own vehicle will reach the set position or the end of the travelling plan. If a future evaluation time period is applied, it may be set to cover 5 seconds, 10 seconds, or the like of the future travelling route of the own vehicle starting at the actual position of the own vehicle. In this case, the time for reaching a set position or the end of the travelling plan does not need to be calculated which reduces the computational burden even further. The future evaluation time period may be at least restarted (as a loop) every time, the previous time of the future evaluation time period is over.

Preferably, the risk assessment unit is configured to receive information about an effective area of the detected object generated by an effective area estimation unit of the visibility planning unit. An effective area may be, e.g., an area in the vicinity or periphery of an object in which the object has an impact on the travelling of the own vehicle. Concretely, for example, the effective area of a traffic sign or a traffic light may be the road area which is in front of the traffic sign or traffic light - in other words, the road (in the travelling direction) behind the traffic sign/light it is not relevant (it has no impact anymore) on the further travelling of the own vehicle so that only the area in front of the traffic sign/light may be considered, in this example, as effective area.

Preferably, the effective area estimation unit sets an effective area around (around can also mean only in front thereof, only behind thereof, only lateral thereto, in the vicinity and/or any combination) the detected object in accordance with a predefined pattern and/or based on data retrieved from GPS, maps and the like. For example the effective area pattern may be read from a database, which may preferably be stored within the travelling control apparatus or which may be received via wireless data transfer from a remote position) and it may be defined differently for each object. It may also be set as a rectangular area in general for all objects. It may also be set by a predefined radius around an object or a predefined distance from the object along the road area. The setting may be done by using digital maps, GPS positional data or the like which may be stored within the travel control apparatus or which may be retrieved wirelessly from a remote source, such as the internet or a remote database).

Preferably, the risk assessment unit calculates the time the own vehicle will require for travelling along the travelling plan within the effective area and the time the detected object is not within the field of view/range of the vehicle surroundings observation unit within the effective area.

Using the effective area increases the reliability of the claimed apparatus and reduces computational burden because only relevant areas of the travelling plan are taken into consideration for the adaption of the travelling plan.

Preferably, the visibility planning unit includes an acceptable time controller which provides a predefined allowable time (or distance) for a detected object to be outside of the field of view/range of the vehicle surroundings observation unit. The allowable time or time interval may be predefined in a database (stored in the travel control apparatus or remotely) or the like from which the visibility planning unit receives the respective allowable time for the detected object.

Preferably, if it is determined that the time outside of the field of view/range is larger than the predefined allowable time and (preferably) the own vehicle is inside of the effective area, a control value calculation unit is configured to provide the correction information (data) to the planning unit with which the travelling plan is adapted to reduce the time of the detected object outside the field of view/range so that it is equal to or smaller than the predefined allowable time. The adaption may cause that the vehicle will travel slower, faster, slightly displaced on the road, on another route or that it may stop earlier, later and the like. For example, at a red traffic light, it may be that the traffic light is not within the field of view if the vehicle stops at the stop line of the traffic light directly. Therefore, the adaption may include that the vehicle stops a bit before the stop line (as far as possible) to keep the traffic light in the field of view during waiting at the red traffic light.

Preferably, the adaption of the travelling plan is carried out iteratively. For example, the adaption may be feedback controlled using the correction information. The "initial" travelling plan may be adapted within a loop many times until, e.g., the time interval is below the allowable time interval. This increases the accuracy of the travelling plan adaption.

Said above control loop may, in a further preferred example, include an emergency checking unit which may require an emergency stop of the own vehicle if it is determined that the situation is too risky. For example, the risk assessment unit may determine that a situation is too risky if the accumulated time of the detected object being outside the field of view is larger than a second allowable time which is greater than the (first) allowable time and/or if the detected object or a further object suddenly appears in front of the own vehicle 100 and the adaption of the travelling plan would take too long. The emergency checking unit may be integrated into the vehicle travelling control apparatus and it may issue a direct emergency stop command to the control unit or any other unit which may control an emergency stop by way of issuing a braking command or the like.

Preferably, the control value calculation unit determines correction information including the speed of the own vehicle, the driving direction and planed route of the own vehicle, and/or a stop position of the own vehicle. Further correction information may be used/determined, such as information regarding acceleration/deceleration.

Preferably, the time during which the detected object is within the field of view/range of the vehicle surroundings observation unit may be, preferably, in addition to the measures explained above, maximized by adjusting the field of view/range, i.e. the time outside the field of view is minimized. This may be realized by controlling the focus of the vehicle surroundings observation unit or the like. For example, a camera may be used as vehicle surroundings observation unit which can be controlled to narrow/widen and/or reduce/extend the field of view. This can increase the field of applications of the claimed apparatus even further so that the claimed apparatus can be used even more flexibly in different driving situations.

Preferably, the detected object includes road objects, such as traffic signs, traffic lights, road markings, other vehicles and/or other bodies, such as humans, animals, and the like.

Preferably, an arbitration unit is provided in the travelling control apparatus or is connected thereto which is configured to set priorities for different objects if more than one object is detected by the target detector and the target detector is configured to select the detected object having the highest priority.

Preferably, the adaption of the travelling plan takes into account, additionally, safety aspects and/or driving comfort aspects, wherein safety aspects include an emergency stop of the own vehicle if the detected object is on the route of the travelling plan and an alternative route guiding the own vehicle around the detected object is not available, and wherein the driving comfort aspects include avoiding high G forces felt by the driver.

Furthermore, the claimed subject-matter includes a vehicle including the vehicle travelling control apparatus according to at least one of the preceding claims and a vehicle surroundings observation unit, which is one of or a combination of devices including a lidar unit, a camera unit, a stereo-camera unit, a radar unit, an electromagnetic wave unit, and/or the like.

Furthermore, the claimed subject-matter includes a method of carrying out the adaption of a travelling plan of an own vehicle with a (vehicle) travelling control apparatus as described above, at least, comprising the steps of generating a travelling plan for the own vehicle, detecting an object within the surroundings of own vehicle the based on data provided by a vehicle surroundings observation unit of the own vehicle, and adapting the travelling plan if the detected object is outside of a field of view of the vehicle surroundings observation unit for a time longer than a predefined allowable time. Further steps of the method are derivable from the configuration of the (vehicle) travelling control apparatus as described above.

Furthermore, the claimed subject-matter includes a computer program product storable in a memory comprising instructions which, when carried out by a computer or any other electronic calculation apparatus, cause the computer to perform the above described method.

Summarizing, the invention provides a solution to increasing the reliability of a travelling control apparatus of a vehicle, such as a car, a truck, a motor bike and the like. The travelling safety and comfort can be improved as well.

In the following the claimed subject-matter will be further explained based on at least one preferential example with reference to the attached exemplary drawings, wherein:
- Figure 1: shows a schematic of an own vehicle 100,
- Figure 2: shows a schematic of a travelling control apparatus 1,
- Figure 3: shows an example of a technical function of the travelling control apparatus 1,
- Figure 4: shows a first scenario within the example of Figure 3,
- Figure 5: shows a second scenario within the example of Figure 3, and
- Figures 6(a)-(c): show a further of a technical function of the travelling control apparatus 1.

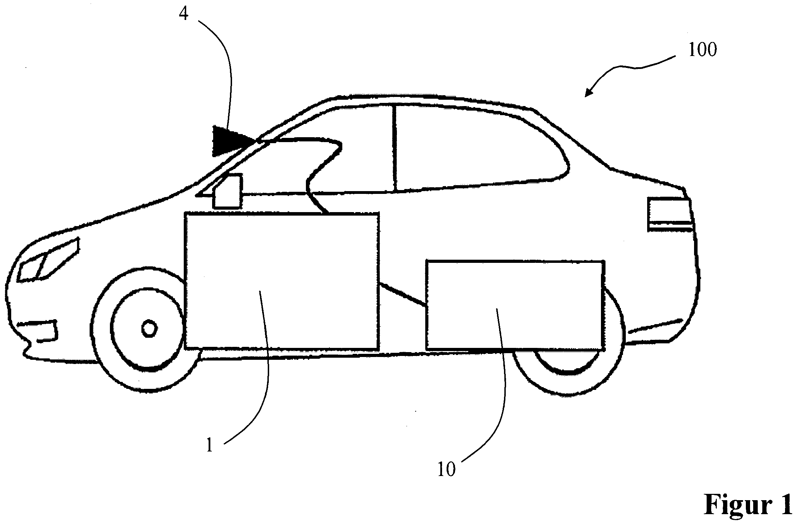

Figure 1 shows an exemplary vehicle which may include, inter alia, a vehicle travelling control apparatus 1 according to the claimed subject matter, a control unit 10 and at least one vehicle surroundings observation unit 4 which are connected to each other and installed within the own vehicle 100. Figure 1 shows the control unit 10 and the vehicle travelling control apparatus 1 as separate units; alternatively the two units may be combined to form a single unit. The own vehicle 100 may have a plurality of control units 10 which may include an engine control unit (ECU).

The own vehicle 100 includes at least one vehicle surroundings observation unit 4 (or sensor) and preferably it includes a plurality of such units 4. The vehicle surroundings observation unit(s) 4 may, e.g., include a camera, a stereo camera, a laser radar, a millimeter wave radar, and/or a lidar. The vehicle travelling control apparatus 1 and/or the control unit 10 may include further subunits for providing driving control functions, such as steering control units, throttle control units, brake control units and the like. Preferably, the own vehicle 100 does not include the control unit 10 and the vehicle travelling control apparatus 1 combines all relevant control functions of the own vehicle 100. Based on the above sketched configuration, it is possible that the own vehicle 100 drives autonomously controlled by the control apparatuses/units, which use information provided by the vehicle surroundings observation unit(s) 4 and further information, e.g. information/data received via optional communication units of the own vehicle 100 which can receive data from a remote data source, such as the Internet, remote servers, and/or GPS. The further information may include map information, traffic information, and the like.

The vehicle travelling control apparatus 1 is connected to and/or includes a unit which is configured to generate a (vehicle) travelling plan. In the following the respective unit is called "planning unit" 2. The travelling plan, in particular, includes the driving route of the own vehicle 100 which is generated based on input from the vehicle surroundings observation units 4, GPS information and/or map information as well as a driving destination(s) input by the driver. Further relevant information may include obstacles on the road ahead and the like which may be included in the map information or which may be detected by the vehicle surroundings observation units 4.

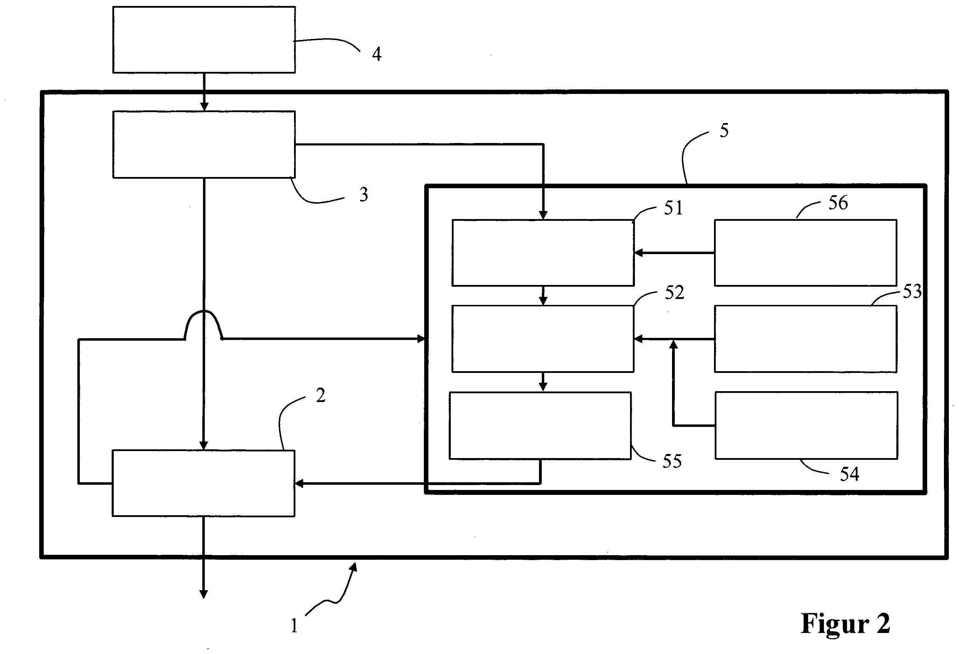

Figure 2 shows an exemplary internal configuration of the vehicle travelling control apparatus 1 which is indicated by a thick outer frame marked with reference number 1. The vehicle surroundings observation unit 4 inputs information to a subunit of the vehicle travelling control apparatus 1 which is, as shown in figure 2, the target detection unit 3. The target detection unit 3 receives the data/information from the vehicle surroundings observation unit(s) 4 and uses said information for carrying out a detection process. The detection process has the goal to detect an object or a plurality of objects which are present in the vicinity of the travelling route or thereon. The actual travelling plan was generated before the here described processing and it is already available for the travel control apparatus 1 in this example. The detection of an object, for example, is carried out by detecting predefined patterns within the information provided by the vehicle surroundings observation unit(s) 4. The object(s) to be detected may include a predefined object or a machine learning process can be used to detect any kind of (not necessarily predefined) objects which are relevant for the travelling of the own vehicle 100 along the travelling plan.

According to one example of a detection process, the target detection unit 3 may receive images (as information/data from the vehicle surroundings observation unit(s) 4) which were taken by a camera of the own vehicle 100 (the camera being a vehicle surroundings observation unit 4 in this example) and the detection process may include an image evaluation process by which objects within the image, which have a predefined shape or the like, are detected. The predefined object and/or the predefined shapes thereof may be stored in a database which may be connected to the vehicle travelling control apparatus 1 by wire or wireless. Predefined objects may include road markings, traffic signs, other vehicles, other traffic participants, such as pedestrians, cyclists or motorbike riders, as well as obstacles in the driving way and/or other bodies on or in the vicinity of the driving route/way.

If the target detection unit 3 detects an object, it inputs the respective data/information to a visibility planning unit 5 which includes further subunits that will be described below. The information from the target detection unit 3 is input into a visibility prediction unit 51 that furthermore receives information from a sensor configuration unit 56. The information that is input from the target detection unit 3 preferably includes the position of the detected object, for example relative to the own vehicle 100 and/or in absolute positional coordinates, the type of the detected object, and further optional information such as a condition of the object, and/or whether the object is moving or stationary. The information input from the sensor configuration unit 56 includes configuration information regarding the field of view (range) of the vehicle surroundings observation unit 4 and/or the field of view of each of the vehicle surroundings observation units 4.

With the above described information, the visibility prediction unit 51 determines, for the actual travelling route, whether the detected object will be continuously within the field of view of the at least one vehicle surroundings observation unit 4 or whether the detected object will be outside of said field of view, temporarily or continuously, when the own vehicle 100 will travel along the (actually used/existing) travelling route of the travelling plan.

For example, the visibility prediction unit 51 will do the estimation as described above (whether the detected object is within the field of view or not) for a plurality of points in time and/or positions of the travelling route ahead of the own vehicle 100.

The information determined by the visibility prediction unit 51 is submitted to a risk assessment unit 52. The risk assessment unit 52 further receives data/information from an acceptable time controller 54, and the risk assessment unit 52 calculates the total driving time required to travel along the travelling plan and the accumulated time the object, which was detected by the target detection unit 3, will be outside of the field of view during the travelling on/along the travelling plan. It is noted that the calculation/estimation of the accumulated time that the object, which was detected by the target detection unit 3, will be outside of the field of view during the travelling on/along the travelling plan can also be carried out by the visibility prediction unit 51. And, in this case, said accumulated time is input into the risk assessment unit 52 which then does not need to carry out the respective calculation. Further preferably, the total driving time required to travel along the travelling plan based on the actual driving condition of the own vehicle 100 may also be carried out by a different unit, e.g. the planning unit 2, so that, in this case, the risk assessment unit 52 would not have to calculate said time (either). In a further preferred alternative, the time required for travelling to a set position or to until the end of the travelling plan is not done at all which will be described further below.

Based on the information input from the acceptable time controller 54, to which, for example, the accumulated time outside of the field of view of the object is compared, the risk assessment unit 52 decides whether the travelling plan has to be adapted/modified or not. In the above example, the risk assessment unit 52 or another unit of the vehicle travelling control apparatus 1 may set a position on the travelling route ahead of the actual position of the own vehicle 100. For example, the set position may be 50 meters, 100 meters or the like ahead of the actual position of the own vehicle 100. The planning unit 2 or the risk assessment unit 52 may then calculate that the own vehicle 100 will arrive at the set position, based on the travelling plan, in, e.g., 1 second, 3 seconds, 6 seconds or the like. The set position may be at the end of the travelling route or it may be at an intermediate position between the actual position of the own vehicle 100 and the (final) end of the travelling route. In the latter case, the above described routine can be carried out repeatedly in a loop-like manner, wherein the set position is newly set for each repetition. The total travelling time determined as described above may be compared to the accumulated time which was determined by the visibility prediction unit 51 or the risk assessment unit 52 and which provides the time period during which the detected object is not visible for the vehicle surroundings monitoring unit(s) 4 until the set position is reached. The relation or the difference between the two times may be compared to the allowable time by the risk assessment unit 4 or the accumulated time during which the object is not visible may be solely compared to the allowable time.

Furthermore, instead of calculating times and comparing the time(s) to an allowable time, the visibility prediction unit 51 may also calculate the estimated distance for which the detected object will not be within the field of view until the set position or the end of the travelling plan is reached. The risk assessment unit 52 may relate the estimated distance to the total travelling distance to the set position (e.g. by dividing the distances or subtracting one from another) and compare said relation or difference to an allowable distance provided by the acceptable time controller 54 which in this alternative provides an allowable distance.

The risk assessment of the risk assessment unit 52 may also be carried out by setting an "future evaluation time period": For example, the risk assessment unit 52 or another unit of the vehicle travelling control apparatus 1 may set a time period for the future travelling of the own vehicle which shall be evaluated by the visibility planning unit 5, i.e. the "future evaluation time period". Said time period may, e.g., be set to be 5 seconds, 10 seconds, 100 seconds or the like, and it may start at the actual position of the own vehicle 100. Said time period then defines the time interval for which the visibility planning unit 5 calculates the time period the detected object is outside the field of view and for which the acceptable time controller 54 provides an allowable time (period). In other words, if the future evaluation time period was set to 10 seconds, the visibility prediction unit 51 has determined an accumulated time (during the next 10 seconds of the travelling of the own vehicle) during which the detected object is not in the field of view of 3 seconds, and the allowable time is 2 seconds, the risk assessment unit 52 will output a violation of the allowable time maximum after having compared the accumulated time of 3 seconds to the allowable time of 2 seconds.

Accordingly, the risk assessment unit 52 preferably decides that the travelling plan has to be adapted if the time/time interval of the detected object being outside of the field of view is larger than an allowable time which is input from the allowable time controller 54 (or if the travelling distance with the detected object outside the field of view is larger than the allowable distance). The allowable time (and/or distance) may be predefined and stored within a database of the acceptable time controller 54. The allowable time (distance) may be different for different predefined objects. Using a future evaluation time period allows replacing the step of calculating the travelling time to a set position or to the end of the travelling plan which reduces the computational burden. The future evaluation time period may be used instead of the travelling time to said set position or the like.

In a further preferred example, the risk assessment unit 52 additionally receives information from an effective area estimation unit 52 which submits information about an effective area of the detected object to the risk assessment unit 52. An effective area of a detected object may be a vicinity/surroundings/periphery of the detected object having a predefined shape, for example a circular, rectangular, or the like. Specifically, for example, if the detected object is a traffic light, the effective area may be a rectangular area which is placed in front of the traffic light covering the street on which the own vehicle 100 will be travelling in accordance with the travelling plan. Taking into account an effective area has the technical advantage that a calculation/determination of the risk assessment unit 52 can be confined to the limited area of the effective area so that the calculation effort is reduced and/or only immediately relevant information is used by the risk assessment unit 52. For example, if the risk assessment unit 52 receives the information about an effective area for the detected object, the above-described calculation/determination of the travelling time along the travelling route and the time during which the detected object is outside of the field of view can be confined to the limited area of the effective area.

In case the risk assessment unit 52 judges that the travelling plan has to be adapted, it inputs the respective information to a control value calculation unit 55 which determines modification parameters/commands for adapting the travelling plan and submits these to the planning unit 2. The planning unit 2 then modifies the travelling plan to an adapted travelling plan and inputs the adapted travelling plan back to the visibility planning unit 5. Thereby, a feedback control loop is established by which the adaption of the travelling plan can be carried out until the travelling plan fulfils the requirement(s) in view of the determinations of the risk assessment unit 52, e.g. until the time/distance interval of the detected object outside the field of view is equal to or smaller than the allowable time/distance.

Said above control loop may, in a further example, include an emergency checking unit (not shown) which may require an emergency stop of the own vehicle 100 if it is determined that the situation is too risky. For example, the risk assessment unit 52 may determine that a situation is too risky if the accumulated time of the detected object being outside the field of view is larger than a second allowable time which is greater than the (first) allowable time and/or if the detected object or a further object suddenly appears in front of the own vehicle 100 and the adaption of the travelling plan would take too long.

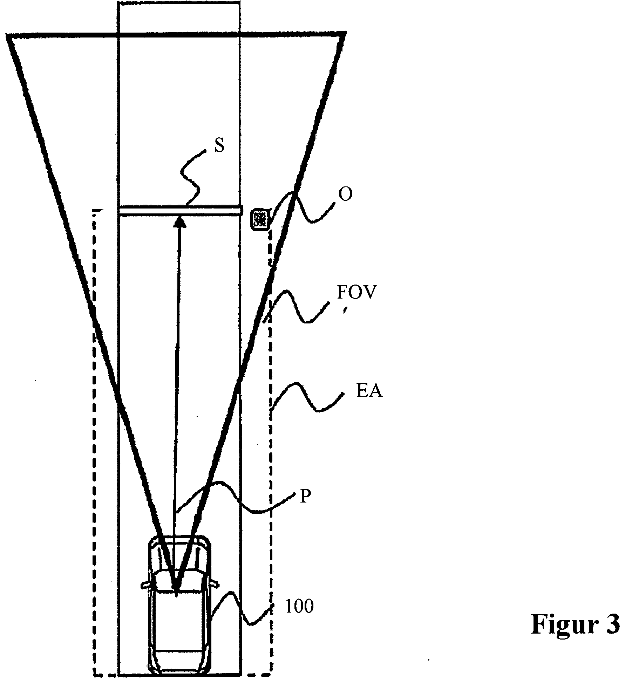

Figure 3 shows an example of the claimed subject matter with an own vehicle 100 which drives on a road in accordance with a travelling plan - here marked by "P". Further, the field of view of an exemplary vehicle surroundings observation unit 4 is indicated by "FOV" and, in the example of figure 3, it has a triangular shape when seen from above. In accordance with the above described configuration of the vehicle travelling control apparatus 1, the target detection unit 3 will detect a predefined object which is a traffic light (marked by "O") according to the depicted example of Figure 3. The traffic light O is arranged next to the road on which the own vehicle 100 is travelling and it is within the field of view FOV as depicted by figure 3. In addition, the road includes a road marking, being a stop line marked by "S", which indicates the stop position for a vehicle travelling on the road in case the traffic light 0 shows a red light.

As described above, as soon as the target detection unit 3 has detected the object, in this example it is the traffic light O, it passes the relevant information to the visibility prediction unit 51. In particular, the target detection unit 3 provides information to the visibility prediction unit 51 that the detected object is a traffic light O, at which position it is placed and which light color it actually shows. The visibility prediction unit 51 will further receive information about the field of view "FOV" from the sensor configuration unit 56 and, based on the received information, the visibility prediction unit 51 will determine or calculate for how long the detected traffic light O will be within the field of view when the own vehicle 100 will travel along the travelling plan route P. Furthermore, the risk assessment unit 52 which receives the information from the visibility prediction unit 51 takes into account information about an effective area received from the effective area estimation unit 53 and an acceptable time for the detected object being outside the field of view received from the acceptable time controller 54.

In the example of Figure 3, it is schematically shown that the effective area "EA" of the detected traffic light O was set to have a rectangular shape and to "cover" the road between the position of the stop line S and the actual position of the own vehicle 100. In other words, applying an effective area has the benefit that the risk assessment unit 52 carries out its calculations only within the limited area of the effective area EA. An area behind the stop line S can be disregarded because the traffic light does not affect the further travelling of the own vehicle 100 after the traffic light O was passed by the own vehicle 100.

In the above-described example of a detected traffic light O two possible scenarios shall be explained in more detail in connection with figures 3, 4 and 5. The following assumptions will be used for the example scenarios: The visibility prediction unit 51 estimates the "lost" or "invisible" time (the time it is outside the field of view) of the detected object by accumulating time points t that satisfy a "condition 1" that a position of the detected object is out of the field of view. The accumulated time shall be "dl". The risk assessment unit 52 then adds the "condition 2" to "dl". Conditions 2 includes that a position of an own vehicle is within an effective area EA of the detected traffic light O. The combination of these time periods (condition 1 and the condition 2) shall be "d". If "d" is greater than the allowable time period "Td" provided by the acceptable time control unit 54, the risk assessment unit 52 will issue a command to the control value calculation unit 55 that a modification of the travelling plan shall be carried out.

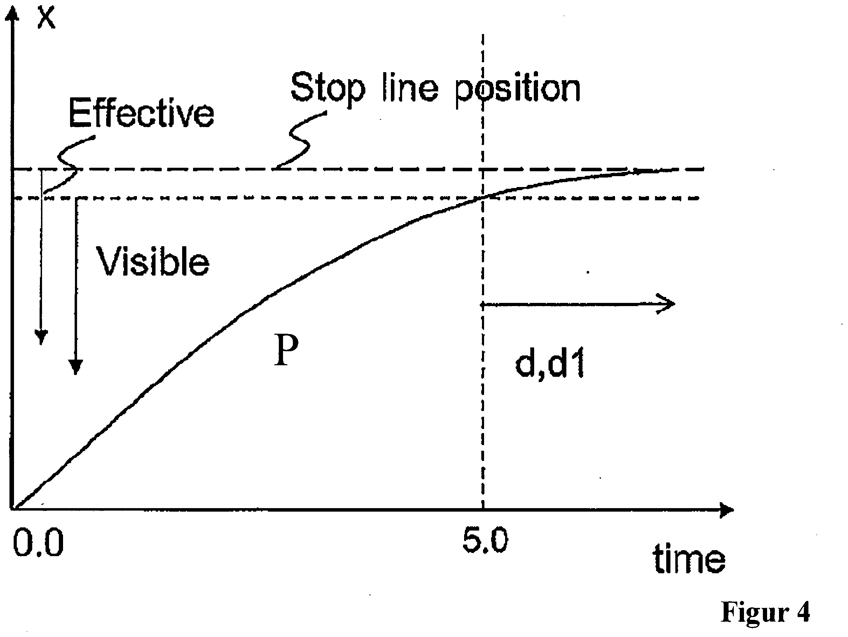

More specifically, figure 4 shows the example that the vehicle surroundings observation unit 4, here being a camera, records a triangular area in front of the own vehicle 100. Based on the images taken by the camera, the target detection unit 3 detects the stop line S and the traffic light O. The target detection unit 3 then calculates the position of the stop line S and the traffic light O. Further, the color of the traffic light is detected, being green, yellow or red. With the information from the target detection unit 3 passed to the visibility planning unit 5, the visibility planning unit 5 or any other subunit of the vehicle travelling control apparatus 1 may calculate based on the travelling plan and the actual own vehicle motion that the own vehicle 100 will reach the stop line S within, e.g., 5 seconds. In the present example the visibility prediction unit 51 estimates the visibility of the detected traffic light 0 in the (near) future, e.g. for a time period from t_O to t_n (as the future evaluation time period), wherein t_O is at the actual position of the own vehicle 100, taking into account the actual travelling plan P and the field of view of the camera provided by the sensor configuration unit 56. Further, for example, if the vehicle travelling control apparatus 1 would set t_n = 10.0 seconds and the traffic light O would be outside the field of view starting from the stop line S, it would be calculated that the traffic light is visible for the first five seconds of the future evaluation time period and that it is not visible for the remaining five seconds of the future evaluation time period. Thus, the "lost" or "invisible" time period of the traffic light would be between the time points of 5 and 10 seconds, during which the own vehicle, e.g., may have to wait at a red traffic light. After this estimation, the risk assessment unit 52 can calculate the risk. The assessment includes evaluating the time periods. In Figure 4, during the period between 5 to 10 seconds, the position of the own vehicle 100 is always within the effective area EA of the traffic light O within which the color indication (green, yellow, and red) of the traffic light O is effective. Accordigly, "d" is identical to the lost time "dl". For example, if the acceptable time is 2 seconds, the risk assessment unit 52 will judge that there is a risk. Therefore, the control value calculation unit 55 will issue a modification command/plan to the planning unit 2.

Fig. 4 shows the respective graph of the above example. The horizontal axis shows the time from t_0 = 0.0 and the vertical axis shows the own vehicle position. The solid curve shows the travelling route/plan P, the upper horizontal broken line shows the position of the stop line and the area below the upper horizontal broken line is the effective area of the traffic light 0. The lower horizontal broken line shows the border of the visible area of the traffic light O and the area below shows the visible area.

After 5.0 seconds, the own vehicle 100 arrives at the area that is within the effective area but outside the visible area and it then stays for further 5.0 seconds within the "invisible" area, e.g., because it has to wait at the stop line S until the traffic light will turn "green". Hence, "d" and "dl" are greater than 5.0 seconds for the above example which is greater than the allowable time.

In the above example, an exemplary measure which may be issued by the control value calculation unit 55 may include that the planning unit 2 makes the own vehicle 100 stop at the red traffic light O at the border of the visible area instead of at the stop line S so that the own vehicle 100 will keep the traffic light O within the field of view during the stop at the red traffic light 0. Other possible measures may be to displace the route P laterally on the road or to reduce/increase the travelling speed so that the own vehicle does not have to wait at a red traffic light or at least for a time interval which is shorter than the allowed time. In an alternative preferred example, the control may also include an option to adapt the travelling plan as discussed above, and, in addition, move the vehicle surroundings observation unit(s) 4 or to modify its range/field of view, e.g, when waiting at the stop line of the traffic light so as to maintain the traffic light O in the field of view when standing at the stop line S.

Again turning to the example of Figure 3, however under the assumption that the traffic light shows a green light and that the own vehicle 100 will pass the stop line after 3.0 seconds. The visibility prediction unit 51 will then estimate that the traffic light O will be visible during the first 3.0 seconds and, if t_n (the future evaluation time period) was set to 10.0 seconds again, the remaining 7 seconds the traffic light O will be invisible. Thus, the lost time period of the traffic light is from 3 to 10 seconds. After this estimation, the risk assessment unit 52 will calculate the risk. The risk assessment evaluates the time periods. During the period between 3.0 to 3.2 seconds, the location of the own vehicle 100 is within the effective area of the traffic light O. Hence, "d" is merely 0.2 seconds. If the acceptable time is 2 seconds, the risk assessment unit 52 will judge that the situation is safe. Therefore the control value calculation unit 55 will not issue a modification information to the planning unit 2.

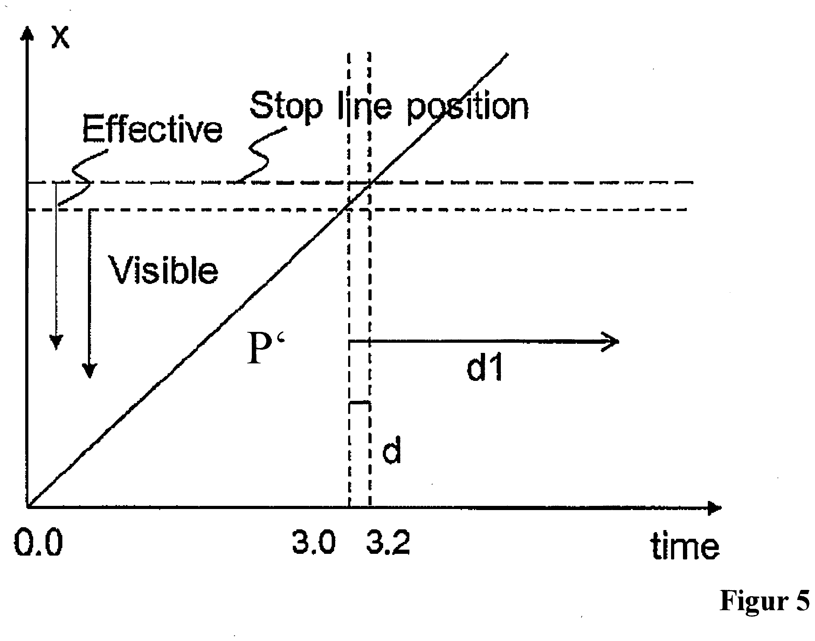

Fig. 5 shows the above example by way of a graph. The horizontal axis shows the time from to = 0.0 and the vertical axis shows the vehicle position. The solid line shows the driving plan P', the upper horizontal broken line shows the position of the stop line and the area below is the effective area of the traffic light. The lower horizontal broken line shows the visibility boundary of the traffic light and the area below shows the visible area. After 3.0 seconds, the own vehicle 100 arrives at an invisible area which is between the effective area and the visible area. "d" is between 3.0 seconds to 3.2 seconds which is however smaller than the allowable time of 2.0 seconds so that the travelling plan will not be adapted.

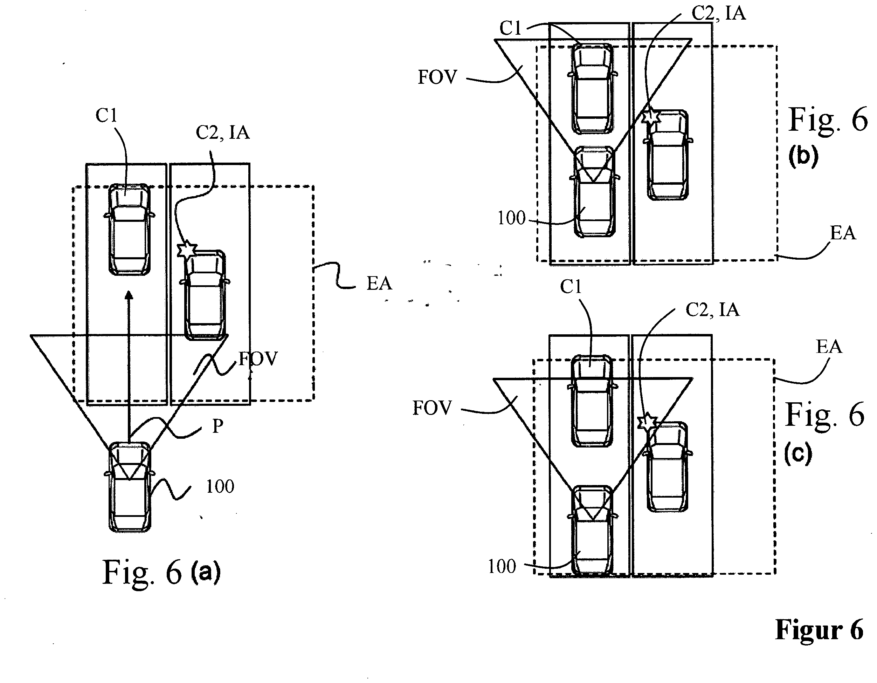

Figures 6 (a) - (c) show a further example for a driving scenario in which the here claimed subject matter can be beneficially applied. Figure 6(a) shows the initial situation in which the own vehicle 100 controlled, i.a., by the vehicle traveling control apparatus 1 approaches two other vehicles, which are indicated by "C1" and "C2" in Figure 6(a). The vehicle C1 travels on the left lane of the road and is directly in front of the own vehicle 100 which also travels on the lane of the road. The vehicle C2 is on the right lane of the road and activates the indicator light IA that indicates that the vehicle C2 intends to change to the left lane. Assuming that the vehicle C2 intends to change to the left lane after the own vehicle 100 has overtaken the vehicle C2, it will be a matter of improved safety that the own vehicle 100 (better: its vehicle surroundings observation unit(s) 4) will maintain the indicator light IA of the vehicle C2 in the field of view. The assumed actual travelling/driving plan P of the own vehicle 100 is also shown, at least in regard of the travelling route, by Figure 6(a). In the actual example the travelling route/plan P controls the own vehicle 100 to stay on the left lane and to follow the vehicle C1 on a straight line and to overtake vehicle C2 while reducing the distance to vehicle C1 if safely possible as schematically shown by Figure 6(b). However, the Figure 6(b) shows that the indicator light IA will not be within the field of view of the vehicle surroundings observation unit 4 of the own vehicle 100 when it follows the actual travelling plan, as shown in Figure 6(b). Accordingly, when applying an effective area EA covering both lanes and both other vehicles C1 and C2, the visibility planning unit 5 and its subunits as described above will determine that the indicator light IA of the vehicle C2, which shall be overtaken by the own vehicle 100, will be outside the field of view starting from the position of the own vehicle 100 that is shown in Figure 6(b) which is about a half of the effective area's length. If the risk assessment unit 52 will determine that it will take more than the allowable time to travel the second half of the effective area or that it is not allowed to have the indicator light IA, being the detected object in this example, outside the field of view for a distance that is about the half of the length of the effective area EA, the input to the control value calculation unit 55 will be issued to modify the travelling plan in order to avoid a risk. If the risk assessment unit 52 should have decided that the situation may be not safe enough, the control value calculation unit 55 determines parameters/commands or the like for the planning unit 2 to adapt/modify the actual travelling plan. One possible result of such a modification is shown by Figure 6(c) which shows that the travelling plan maintains the route (travelling straight on the left lane), however, that the minimum distance to the preceding vehicle C1 is set to be larger while overtaking the vehicle C2 so that the detected object, the indicator light IA in this example, is kept in the field of view for an increased time, as schematically shown by Figure 6(c). Of course, other adaptions may be alternatively or additionally applied, such as increasing the speed of the own vehicle 100 (which may only be possible if the vehicle C1 is not present), reducing the speed of the own vehicle 100, further increasing the distance to the vehicle C1 so that the other vehicle C2 can change to the left lane ahead of the own vehicle 100, or the like.

Furthermore, if the vehicle C1 would not be present in the above described example, it would also be possible to set the effective area EA so that it ends at the position of the indicator light IA of the vehicle C2. In this case, the risk assessment unit 52 may decide that the actual travelling plan does not need to be adapted because the overtaking is nearly finished when the indicator light IA is out of the field of view of the own vehicle 100 and, thus, the allowable time may be greater than the time during which the indicator light is outside the field of view.

Summarizing, the described subject matter allows to take an automated decision based on objective criteria as to when a travelling plan shall be adapted when the target detection unit 3 of the vehicle travelling control apparatus 1 detects an object ahead of the own vehicle 100. Specifically, the control provides an effective means to maintain the detected object within the field of view during the travelling of the own vehicle 100 along a travelling plan/route. Different alternatives for taking the decision and for the configuration of the visibility planning unit 5 and/or the vehicle travelling control apparatus 1 were described above and may be combined and/or modified within the scope defined by the appended claims.

## Claims

1. A vehicle travelling control apparatus configured to be installed at an own vehicle comprising
- a planning unit (2) that is configured to generate a travelling plan of the own vehicle;
- a target detection unit (3) which is configured to receive information from a vehicle surroundings observation unit (4) of the own vehicle and to detect an object in the surroundings of the own vehicle based on the received data; and
- a visibility planning unit (5) which is configured to determine a time during which the detected object will be outside a field of view of the vehicle surroundings observation unit (4) while the own vehicle travels along the travelling plan and to input correction information to the planning unit (2) if the determined time is greater than a preset allowable time.

2. The vehicle travelling control apparatus according to claim 1, wherein the planning unit (2) is configured to adapt the travelling plan to generate an adapted travelling plan based on the correction information provided by the visibility planning unit (5) such that a time during which the detected object will be outside a field of view of the vehicle surroundings observation unit (4) while travelling along the travelling plan is decreased.

3. The vehicle travelling control apparatus according to at least one of the preceding claims, wherein the visibility planning unit (5) includes a visibility prediction unit (51) which is configured to receive information about a configuration of the vehicle surroundings observation unit (4), including the field of view thereof and to receive information about the detected object, and
the visibility prediction unit (51) is configured to predict for a plurality of positions along the route of the travelling plan whether the detected object will be within the field of view.

4. The vehicle travelling control apparatus according to at least one of the preceding claims, wherein the visibility planning unit (5) includes a risk assessment unit (52) which is configured to determine the time the own vehicle will need for travelling along the route of the travelling plan and the time the detected object is not within the field of view of the vehicle surroundings observation unit (4).

5. The vehicle travelling control apparatus according to claim 4, wherein the risk assessment unit is configured to receive information about an effective area of the detected object generated by an effective area estimation unit (53) of the visibility planning unit (52), wherein
the effective area estimation unit (53) sets a virtual effective area in the vicinity of the detected object in accordance with a predefined pattern and/or based on data retrieved from maps, and
the risk assessment unit (52) calculates the time the own vehicle will require for travelling along the travelling plan within the effective area and the time the detected object is not within the field of view of the vehicle surroundings observation unit (4) when the own vehicle travels within the effective area.

6. The vehicle travelling control apparatus according to at least one of the preceding claims, wherein the visibility planning unit (5) includes an acceptable time controller (54) which provides a predefined allowable time for a detected object to be outside of the field of view of the vehicle surroundings observation unit (4), wherein,
if it is determined by the risk assessment unit (52) that the time outside of the field of view is larger than the predefined allowable time, a control value calculation unit (55) is configured to provide the correction information to the planning unit (2) with which the travelling plan is adapted to reduce the time of the detected object outside the field of view to a value that it is equal to or smaller than the predefined allowable time.

7. The vehicle travelling control apparatus according to at least one of the preceding claims, wherein the adaption of the travelling plan is carried out iteratively.

8. The vehicle travelling control apparatus according to at least one of the preceding claims, wherein the control value calculation unit (55) determines correction information including the speed of the own vehicle, the driving direction and planed route of the own vehicle, and/or a stop position of the own vehicle.

9. The vehicle travelling control apparatus according to at least one of the preceding claims, wherein the time during which the detected object is within the field of view of the vehicle surroundings observation unit (4) is in addition maximized by adjusting the field of view of the vehicle surroundings observation unit (4).

10. The vehicle travelling control apparatus according to at least one of the preceding claims, wherein the detected object includes road objects, such as traffic signs, traffic lights, road markings, and/or other vehicles or other bodies.

11. The vehicle travelling control apparatus according to at least one of the preceding claims, wherein the vehicle travelling control apparatus (1) further includes an arbitration unit which is configured to set priorities for different objects if more than one object is detected by the target detection unit (3) and the target detection unit (3) is configured to select the detected object having the highest priority.

12. The vehicle travelling control apparatus according to at least one of the preceding claims, wherein the planning unit (2) adapts the travelling plan by taking into account safety aspects and driving comfort aspects in addition, wherein safety aspects include an emergency stop of the own vehicle if the detected object is within the travelling plan and an alternative travelling plan for guiding the own vehicle around the detected object is not available, and wherein the driving comfort aspects include avoiding high G forces to the driver of the own vehicle.

13. An own vehicle including a vehicle travelling control apparatus (1) according to at least one of the preceding claims and a vehicle surroundings observation unit (4), which is one of or a combination of a lidar unit, a camera unit, a stereo-camera unit, a radar unit, an electromagnetic wave unit.

14. Method of carrying out the adaption of a travelling plan of an own vehicle with a vehicle travelling control apparatus according to at least one of the preceding claims 1-12, comprising the steps of
- generating a travelling plan for the own vehicle,
- detecting an object within the surroundings of own vehicle the based on data provided by a vehicle surroundings observation unit of the own vehicle, and
- adapting the travelling plan if the detected object is outside of a field of view of the vehicle surroundings observation unit for a time longer than a predefined allowable time.

15. A computer program product storable in a memory comprising instructions which, when carried out by a computer, cause the computer to perform the method according to claim 14.

## Patentansprüche

1. Vorrichtung zum Steuern der Fahrt eines Fahrzeugs, die für eine Installation in einem Trägerfahrzeug konfiguriert ist und Folgendes umfasst:
- eine Planungseinheit (2), die konfiguriert ist, einen Plan für die Fahrt des Trägerfahrzeugs zu erzeugen;
- eine Zieldetektionseinheit (3), die konfiguriert ist, Informationen von einer Fahrzeugumgebungs-Beobachtungseinheit (4) des Trägerfahrzeugs zu empfangen und ein Objekt in der Umgebung des Trägerfahrzeugs anhand der empfangenen Daten zu detektieren; und
- eine Sichtbarkeitsplanungseinheit (5), die konfiguriert ist, eine Zeit, in der sich das detektierte Objekt außerhalb eines Gesichtsfeldes der Fahrzeugumgebungs-Beobachtungseinheit (4) befinden wird, während das Trägerfahrzeug gemäß dem Plan für die Fahrt fährt, zu bestimmen und Korrekturinformationen in die Planungseinheit (2) einzugeben, falls die bestimmte Zeit größer als eine im Voraus festgelegte zulässige Zeit ist.

2. Vorrichtung zum Steuern der Fahrt eines Fahrzeugs nach Anspruch 1, wobei die Planungseinheit (2) konfiguriert ist, den Plan für die Fahrt anzupassen, um anhand der Korrekturinformationen, die durch die Sichtbarkeitsplanungseinheit (5) bereitgestellt werden, einen angepassten Plan für die Fahrt zu erzeugen, derart, dass eine Zeit, in der sich das detektierte Objekt außerhalb eines Gesichtsfeldes der Fahrzeugumgebungs-Beobachtungseinheit (4) befinden wird, während gemäß dem Plan für die Fahrt gefahren wird, verringert wird.

3. Vorrichtung zum Steuern der Fahrt eines Fahrzeugs nach wenigstens einem der vorhergehenden Ansprüche, wobei die Sichtbarkeitsplanungseinheit (5) eine Sichtbarkeitsvorhersageeinheit (51) umfasst, die konfiguriert ist, Informationen über eine Konfiguration der Fahrzeugumgebungs-Beobachtungseinheit (4) einschließlich ihres Gesichtsfeldes sowie Informationen über das detektierte Objekt zu empfangen, uhd
die Sichtbarkeitsvorhersageeinheit (51) konfiguriert ist, für mehrere Positionen entlang der Route des Plans für die Fahrt vorherzusagen, ob sich das detektierte Objekt innerhalb des Gesichtsfeldes befinden wird.

4. Vorrichtung zum Steuern der Fahrt eines Fahrzeugs nach wenigstens einem der vorhergehenden Ansprüche, wobei die Sichtbarkeitsplanungseinheit (5) eine Gefahrenabschätzungseinheit (52) enthält, die konfiguriert ist, die Zeit zu bestimmen, die das Trägerfahrzeug benötigen wird, um längs der Route des Plans für die Fahrt zu fahren, und die Zeit zu bestimmen, in der sich das detektierte Objekt nicht im Gesichtsfeld der Fahrzeugumgebungs-Beobachtungseinheit (4) befindet.

5. Vorrichtung zum Steuern der Fahrt eines Fahrzeugs nach Anspruch 4, wobei die Gefahrenabschätzungseinheit konfiguriert ist, Informationen über einen effektiven Bereich des detektierten Objekts, die durch eine Einheit (53) zum Schätzen des effektiven Bereichs der Sichtbarkeitsplanungseinheit (52) erzeugt werden, zu empfangen, wobei
die Einheit (53) zum Schätzen des effektiven Bereichs einen virtuellen effektiven Bereich in der Umgebung des detektierten Objekts in Übereinstimmung mit einem im Voraus definierten Muster und/oder anhand von aus Karten wiedergewonnenen Daten festlegt und
die Gefahrenabschätzungseinheit (52) die Zeit, in der das Trägerfahrzeug gemäß dem Plan für die Fahrt innerhalb des effektiven Bereichs fahren muss, und die Zeit, in der sich das detektierte Objekt nicht in dem Gesichtsfeld der Fahrzeugumgebungs-Beobachtungseinheit (4) befindet, wenn das Trägerfahrzeug in dem effektiven Bereich fährt, berechnet.

6. Vorrichtung zum Steuern der Fahrt eines Fahrzeugs nach wenigstens einem der vorhergehenden Ansprüche, wobei die Sichtbarkeitsplanungseinheit (5) eine Steuereinheit (54) für annehmbare Zeit enthält, die eine im Voraus definierte zulässige Zeit bereitstellt, in der sich ein detektiertes Objekt außerhalb des Gesichtsfeldes der Fahrzeugumgebung-Beobachtungseinheit (4) befinden darf, wobei
dann, wenn durch die Gefahrenabschätzungseinheit (52) bestimmt wird, dass die Zeit außerhalb des Gesichtsfeldes größer als die im Voraus definierte zulässige Zeit ist, eine Steuerwert-Berechnungseinheit (55) konfiguriert ist, die Korrekturinformationen für die Planungseinheit (2) bereitzustellen, mit denen der Plan für die Fahrt angepasst wird, um die Zeit, in der sich das detektierte Objekt außerhalb des Gesichtsfeldes befindet, auf einen Wert zu verringern, der gleich oder kleiner als die im Voraus definierte zulässige Zeit ist.

7. Vorrichtung zum Steuern der Fahrt eines Fahrzeugs nach wenigstens einem der vorhergehenden Ansprüche, wobei die Anpassung des Plans für die Fahrt iterativ ausgeführt wird.

8. Vorrichtung zum Steuern der Fahrt eines Fahrzeugs nach wenigstens einem der vorhergehenden Ansprüche, wobei die Steuerwert-Berechnungseinheit (55) Korrekturinformationen bestimmt, die die Geschwindigkeit des Trägerfahrzeugs, die Fahrtrichtung und die geplante Route des Trägerfahrzeugs und/oder eine Stoppposition des Trägerfahrzeugs enthalten.

9. Vorrichtung zum Steuern der Fahrt eines Fahrzeugs nach wenigstens einem der vorhergehenden Ansprüche, wobei die Zeit, in der sich das detektierte Objekt in dem Gesichtsfeld der Fahrzeugumgebungs-Beobachtungseinheit (4) befindet, außerdem durch Einstellen des Gesichtsfeldes der Fahrzeugumgebungs-Beobachtungseinheit (4) maximal gemacht wird.

10. Vorrichtung zum Steuern der Fahrt eines Fahrzeugs nach wenigstens einem der vorhergehenden Ansprüche, wobei das detektierte Objekt Straßenobjekte wie etwa Verkehrszeichen, Verkehrsampeln, Straßenmarkierungen und/oder andere Fahrzeuge oder andere Körper umfasst.

11. Vorrichtung zum Steuern der Fahrt eines Fahrzeugs nach wenigstens einem der vorhergehenden Ansprüche, wobei die Vorrichtung zum Steuern der Fahrt eines Fahrzeugs (1) ferner eine Arbitrierungseinheit enthält, die konfiguriert ist, für verschiedene Objekte Prioritäten festzulegen, falls mehr als ein Objekt durch die Zieldetektionseinheit (3) detektiert wird, und die Zieldetektionseinheit (3) konfiguriert ist, das detektierte Objekt mit der höchsten Priorität auszuwählen.

12. Vorrichtung zum Steuern der Fahrt eines Fahrzeugs nach wenigstens einem der vorhergehenden Ansprüche, wobei die Planungseinheit (2) den Plan für die Fahrt außerdem durch Berücksichtigen von Sicherheitsaspekten und Fahrkomfortaspekten anpasst, wobei Sicherheitsaspekte einen Nothalt des Trägerfahrzeugs umfassen, falls sich das detektierte Objekt in dem Plan für die Fahrt befindet und ein alternativer Plan für die Fahrt zum Führen des Trägerfahrzeugs um das detektierte Objekt nicht verfügbar ist, und wobei die Fahrkomfortaspekte das Vermeiden hoher Beschleunigungskräfte auf den Fahrer des Trägerfahrzeugs umfassen.

13. Trägerfahrzeug, das eine Vorrichtung (1) zum Steuern der Fahrt eines Fahrzeugs nach wenigstens einem der vorhergehenden Ansprüche und eine Fahrzeugumgebungs-Beobachtungseinheit (4), die eine Lidar-Einheit und/oder eine Kameraeinheit und/oder eine Stereokameraeinheit und/oder eine Radareinheit und/oder eine Einheit für elektromagnetische Wellen ist, umfasst.

14. Verfahren zum Ausführen des Anpassens eines Plans für die Fahrt eines Trägerfahrzeugs mit einer Vorrichtung zum Steuern der Fahrt des Fahrzeugs nach wenigstens einem der vorhergehenden Ansprüche 1-12, das die folgenden Schritte umfasst:
- Erzeugen eines Plans für die Fahrt für das Trägerfahrzeug,
- Detektieren eines Objekts in der Umgebung des Trägerfahrzeugs anhand von Daten, die durch eine Fahrzeugumgebungs-Beobachtungseinheit des Trägerfahrzeugs bereitgestellt werden, und
- Anpassen des Plans für die Fahrt, falls sich das detektierte Objekt für eine Zeit, die länger als eine im Voraus definierte zulässige Zeit ist, außerhalb eines Gesichtsfeldes der Fahrzeugumgebungs-Beobachtungseinheit befindet.

15. Computerprogrammprodukt, das in einem Speicher gespeichert werden kann und Befehle enthält, die dann, wenn sie durch einen Computer ausgeführt werden, den Computer dazu veranlassen, das Verfahren nach Anspruch 14 auszuführen.

## Revendications

1. Appareil de commande de déplacement d'un véhicule configuré pour être installé sur un propre véhicule comprenant
- une unité de planification (2) qui est configurée pour générer un plan de déplacement du propre véhicule ;
- une unité de détection de cible (3) qui est configurée pour recevoir une information depuis une unité d'observation des alentours d'un véhicule (4) du propre véhicule et pour détecter un objet dans les alentours du propre véhicule sur la base des données reçues ; et
- une unité de planification de visibilité (5) qui est configurée pour déterminer un laps de temps pendant lequel l'objet détecté sera à l'extérieur d'un champ de vision de l'unité d'observation des alentours d'un véhicule (4) pendant que le propre véhicule se déplace le long du plan de déplacement, et pour entrer une information de correction vers l'unité de planification (2) si le laps de temps déterminé est supérieur à un laps de temps permissible prédéfini.

2. Appareil de commande de déplacement d'un véhicule selon la revendication 1, dans lequel l'unité de planification (2) est configurée pour adapter le plan de déplacement pour générer un plan de déplacement adapté sur la base de l'information de correction fournie par l'unité de planification de visibilité (5) de sorte qu'un laps de temps pendant lequel l'objet détecté sera à l'extérieur d'un champ de vision de l'unité d'observation des alentours d'un véhicule (4) pendant le déplacement le long du plan de déplacement est diminué.

3. Appareil de commande de déplacement d'un véhicule selon l'une au moins des revendications précédentes, dans lequel l'unité de planification de visibilité (5) inclut une unité de prédiction de visibilité (51) qui est configurée pour recevoir une information concernant une configuration de l'unité d'observation des alentours d'un véhicule (4), incluant le champ de vision de celle-ci, et pour recevoir une information concernant l'objet détecté, et
l'unité de prédiction de visibilité (51) est configurée pour prédire, pour une pluralité de positions le long de l'itinéraire du plan de déplacement, si l'objet détecté sera à l'intérieur du champ de vision.

4. Appareil de commande de déplacement d'un véhicule selon l'une au moins des revendications précédentes, dans lequel l'unité de planification de visibilité (5) inclut une unité d'évaluation de risque (52) qui est configurée pour déterminer le laps de temps dont le propre véhicule aura besoin pour se déplacer le long de l'itinéraire du plan de déplacement et le laps de temps où l'objet détecté ne sera pas l'intérieur du champ de vision de l'unité d'observation des alentours d'un véhicule (4).

5. Appareil de commande de déplacement d'un véhicule selon la revendication 4, dans lequel l'unité d'évaluation de risque est configurée pour recevoir une information concernant une zone effective de l'objet détecté générée par une unité d'estimation de zone effective (53) de l'unité de planification de visibilité (5), dans lequel
l'unité d'estimation de zone effective (53) définit une zone effective virtuelle dans le voisinage de l'objet détecté en accord avec un motif prédéfini et/ou sur la base de données récupérées à partir de cartes, et
l'unité d'évaluation de risque (52) calcule le laps de temps que le propre véhicule exigera pour se déplacer le long du plan de déplacement à l'intérieur de la zone effective et le laps de temps où l'objet détecté n'est pas à l'intérieur du champ de vision de l'unité d'observation des alentours d'un véhicule (4) quand le propre véhicule se déplace à l'intérieur de la zone effective.

6. Appareil de commande de déplacement d'un véhicule selon l'une au moins des revendications précédentes, dans lequel l'unité de planification de visibilité (5) inclut un contrôleur de laps de temps acceptable (54) qui fournit un laps de temps permissible prédéfini pour qu'un objet détecté soit à l'extérieur du champ de vision de l'unité d'observation des alentours d'un véhicule (4), dans lequel,
si l'unité d'évaluation de risque (52) détermine que le laps de temps à l'extérieur du champ de vision est supérieur au laps de temps permissible prédéfini, une unité de calcul de valeur de commande (55) est configurée pour fournir l'information de correction à l'unité de planification (2) avec laquelle le plan de déplacement est adapté pour réduire le laps de temps de l'objet détecté à l'extérieur du champ de vision jusqu'à une valeur qui est égale ou inférieure au laps de temps permissible prédéfini.

7. Appareil de commande de déplacement d'un véhicule selon l'une au moins des revendications précédentes, dans lequel l'adaptation du plan de déplacement est exécutée de manière itérative.

8. Appareil de commande de déplacement d'un véhicule selon l'une au moins des revendications précédentes, dans lequel l'unité de calcul de valeur de commande (55) détermine une information de correction incluant la vitesse du propre véhicule, la direction de conduite et l'itinéraire planifié du propre véhicule, et/ou une position d'arrêt du propre véhicule.

9. Appareil de commande de déplacement d'un véhicule selon l'une au moins des revendications précédentes, dans lequel le laps de temps pendant lequel l'objet détecté est à l'intérieur du champ de vision de l'unité d'observation des alentours d'un véhicule (4) est additionnellement maximisé en ajustant le champ de vision de l'unité d'observation des alentours d'un véhicule (4).

10. Appareil de commande de déplacement d'un véhicule selon l'une au moins des revendications précédentes, dans lequel l'objet détecté inclut des objets routiers tels que des panneaux de signalisation, des feux de signalisation, des marquages routiers, et/ou d'autres véhicules ou d'autres corps.

11. Appareil de commande de déplacement d'un véhicule selon l'une au moins des revendications précédentes, dans lequel l'appareil de commande de déplacement d'un véhicule (1) inclut en outre une unité d'arbitrage qui est configurée pour définir des priorités de différents objets si plus d'un objet est détecté par l'unité de détection de cible (3) et l'unité de détection de cible (3) est configurée pour sélectionner l'objet détecté ayant la plus haute priorité.

12. Appareil de commande de déplacement d'un véhicule selon l'une au moins des revendications précédentes, dans lequel l'unité de planification (2) adapte le plan de déplacement en prenant en compte des aspects de sécurité et des aspects de confort de conduite additionnellement, dans lequel lesdits aspects de sécurité incluent un arrêt d'urgence du propre véhicule si l'objet détecté est à l'intérieur du plan de déplacement et qu'un plan de déplacement alternatif destiné à guider le propre véhicule autour de l'objet détecté n'est pas disponible, et dans lequel lesdits aspects de confort de conduite incluent d'éviter des forces G élevées sur le conducteur du propre véhicule.

13. Propre véhicule incluant un appareil de commande de déplacement d'un véhicule (1) selon l'une au moins des revendications précédentes et une unité d'observation des alentours d'un véhicule (4), qui est une unité ou une combinaison d'unités parmi une unité lidar, une unité de caméra, une unité de caméra stéréoscopique, une unité radar, une unité à ondes électromagnétiques.

14. Procédé de mise en œuvre de l'adaptation d'un plan de déplacement d'un propre véhicule avec un appareil de commande déplacement d'un véhicule selon l'une au moins des revendications précédentes 1 à 12, comprenant les étapes consistant à :
- générer un plan de déplacement pour le propre véhicule,
- détecter un objet à l'intérieur des alentours du propre véhicule sur la base de données fournies par une unité d'observation des alentours du propre véhicule, et
- adapter le plan de déplacement si l'objet détecté est à l'extérieur d'un champ de vision de l'unité d'observation des alentours d'un véhicule pendant un laps de temps plus long qu'un laps de temps permissible prédéfini.

15. Produit de programme d'ordinateur pouvant être stocké dans une mémoire comprenant des instructions qui, lorsqu'elles sont exécutées par un ordinateur, amènent l'ordinateur à mettre en œuvre le procédé selon la revendication 14.
